# EUROPÄISCHE PATENTSCHRIFT

(11) **EP 2 903 209 B1**
(45) Veröffentlichungstag und Bekanntmachung des Hinweises auf die Patenterteilung: **14.11.2018**
(21) Anmeldenummer: 14153303.4
(22) Anmeldetag: 30.01.2014
(51) Int. Cl.: H04L 12/24, H04L 29/12, G05B 19/418, H04L 29/06

(54) **Verfahren zur Aktualisierung von Nachrichtenfilterregeln einer Netzzugangskontrolleinheit eines industriellen Kommunikationsnetzes, Adressverwaltungseinheit und Konvertereinheit**
Method for updating message filter rules of a network access control unit of an industrial communication network, address management unit and converter unit
Procédé d'actualisation de règles de filtration de messages d'une unité de contrôle d'accès au réseau d'un réseau de communication industriel, unité d'administration d'adresses et unité de convertisseur

(43) Veröffentlichungstag der Anmeldung: 05.08.2015
(73) Patentinhaber: Siemens Aktiengesellschaft, 80333 München (DE)
(72) Erfinder: Albrecht, Harald, 90475 Nürnberg (DE); Plonka, Reiner, 90768 Fürth (DE)

(56) Entgegenhaltungen:
- EP-A1- 2 367 337
- WO-A1-2006/005991
- US-A1- 2009 262 382

## Beschreibung

In EP 1 024 636 B1 ist ein Verfahren zur Konfigurierung einer Sicherheitseinrichtung in einer Kommunikationseinrichtung beschrieben, bei dem die Kommunikationseinrichtung über eine Netz-Anschlusseinheit mit einem mehrere Kommunikationseinheiten aufweisenden lokalen Netz verbindbar ist. Den Kommunikationseinheiten und der Netz-Anschlusseinheit ist jeweils eine die jeweilige Einheit identifizierende erste Adresse und eine die jeweilige Einheit und dessen lokales Netz identifizierende zweite Adresse zugeordnet. Für eine Ermittlung der ersten Adressen der Kommunikationseinheiten durch die Netz-Anschlusseinheit wird jeweils eine Anforderungsnachricht an alle im lokalen Netz mit Hilfe der zweiten Adresse der Netz-Anschlusseinheit ermittelten adressierbaren Einheiten gesendet. Im Rahmen der Anforderungsnachricht wird eine Kommunikationseinheit mittels ihrer zweiten Adresse adressiert. In Fällen, in denen eine Kommunikationseinheit infolge einer empfangenen Anforderungsnachricht eine Bestätigungsmeldung an die Netz-Anschlusseinheit zurückübermittelt, wird die dabei mitübermittelte erste Adresse der Kommunikationseinheit in der Sicherheitseinrichtung der betreffenden Kommunikationseinheit zugeordnet gespeichert.

Aus DE 101 46 397 B4 ist ein Verfahren zum Konfigurieren einer Firewall oder eines Routers bekannt, bei dem ein erster Rechner oder ein erstes Rechnernetz über die Firewall oder den Router mit einem zweiten Rechnernetz verbunden ist. Der Router oder die Firewall wird derart konfiguriert, dass eine Rechnerkommunikation zwischen einem Rechner des zweiten Rechnernetzes und dem ersten Rechner oder einem vorgegebenen Rechner des ersten Rechnernetzes ermöglicht wird. Dabei wird ein vorgefertigtes und der jeweiligen Rechnerkommunikation zugeordnetes Antragsformular ausgefüllt. Das Antragsformular basiert auf einer einmalig erstellten und der jeweiligen Rechnerkommunikation zugeordneten technischen Risikoanalyse. Darüber hinaus wird das ausgefüllte Antragsformular in einen für die Konfigurierung der Firewall oder des Routers geeigneten Code umgesetzt. In Abhängigkeit des Codes wird die Firewall oder der Router automatisch konfiguriert.

EP 2 400 708 B1 offenbart eine Netzwerk-Schutzeinrichtung zur Kommunikationssteuerung zwischen einer externen Datenverarbeitungseinrichtung außerhalb eines Automatisierungsnetzwerks und einer Automatisierungseinrichtung im Automatisierungsnetzwerk. Zur Kommunikation mit der Automatisierungseinrichtung ist ein Automatisierungsprotokoll vorgesehen. In der Netzwerk-Schutzeinrichtung sind Protokoll-Regeln hinterlegt. Diese Protokoll-Regeln umfassen Vorgaben, die eine Entscheidung über eine Weiterleitung oder Nicht-Weiterleitung einer Protokoll-Nachricht des Automatisierungsprotokolls vom Inhalt der Protokoll-Nachricht abhängig machen. Die Netzwerk-Schutzeinrichtung ist dabei zur Entscheidung über eine Weiterleitung oder Nicht-Weiterleitung einer eingehenden Protokoll-Nachricht des Automatisierungsprotokolls entsprechenden den Vorgaben der Protokoll-Regeln ausgebildet. Darüber hinaus umfassen die in der Netzwerk-Schutzreinrichtung hinterlegten Protokoll-Regeln Vorgaben, die eine Entscheidung über das Weiterleiten oder Nicht-Weiterleiten der Protokoll-Nachricht weiterhin von einem Betriebszustand eines oder mehrerer Elemente des Automatisierungsnetzwerks bzw. einer oder mehrerer mit dem Automatisierungsnetzwerk verbundenen Einrichtungen abhängig macht.

Das Dokument WO2006005991 beschreibt ein Netzverwaltungssystem zur Aktualisierung von Nachrichtenfilterregeln beim Austausch zwei Kommunikationsgeräten, die in einer Adressverwaltungseinheit registriert wird.

Bei dynamisch wechselnden Kommunikationsnetzadressen sind bisherige Ansätze zur Konfiguration von Firewalls allenfalls eingeschränkt praktikabel, da diese grundsätzlich statische Kommunikationsnetzadressen voraussetzen, auf die sich Firewall-Filterregeln beziehen. Dieses Problem wird mit IPv6 noch weiter zunehmen, da Kommunikationsgeräte mit IPv6 ihre Kommunikationsnetzadressen selbständig und dezentral generieren können.
Der vorliegenden Erfindung liegt daher die Aufgabe zugrunde, ein Verfahren zur effizienten Aktualisierung von Nachrichtenfilterregeln einer Netzzugangskontrolleinheit bei sich dynamisch ändernden bzw. dezentral vergebenen Kommunikationsnetzadressen anzugeben sowie geeignete technische Realisierungen des Verfahrens zu schaffen.
Diese Aufgabe wird erfindungsgemäß durch ein Verfahren mit den in Anspruch 1 angegebenen Merkmalen, und durch eine Konvertereinheit mit den in Anspruch 11 angegebenen Merkmalen gelöst.
Entsprechend dem erfindungsgemäßen Verfahren zur Aktualisierung von Nachrichtenfilterregeln einer Netzzugangskontrolleinheit eines industriellen Kommunikationsnetzes wird ein erstes Kommunikationsgerät, dem zumindest eine adressbasierte Nachrichtenfilterregel zugeordnet ist, mit seiner Kommunikationsnetzadresse und einer Gerätebeschreibung bei einer Inbetriebnahme in einer Adressverwaltungseinheit registriert. Dabei umfasst die Gerätebeschreibung zumindest eine Funktions- bzw. Topologieangabe. Vorzugsweise werden durch die Netzzugangskontrolleinheit adressbasierte Nachrichtenfilterregeln angewendet. Die Netzzugangskontrolleinheit kann beispielsweise eine Firewall für Datenrahmen bzw. Datenpakete sein. Bei einem Austausch des ersten Kommunikationsgeräts durch ein zweites Kommunikationsgerät erfolgt eine Registrierung des zweiten Kommunikationsgeräts in der Adressverwaltungseinheit. Dabei werden eine Kommunikationsnetzadresse und eine Gerätebeschreibung des zweiten Kommunikationsgeräts erfasst.

Bei der Registrierung des zweiten Kommunikationsgeräts überprüft die Adressverwaltungseinheit erfindungsgemäß, ob bereits ein Kommunikationsgerät mit identischer Gerätebeschreibung registriert ist. Im Fall eines positiven Überprüfungsergebnisses übermittelt die Adressverwaltungseinheit eine Änderungsmeldung über die Registrierung des zweiten Kommunikationsgeräts, das eine identische Gerätebeschreibung wie das erste Kommunikationsgerät aufweist, an die Netzzugangskontrolleinheit oder an eine Konvertereinheit. Dabei umfasst die Änderungsmeldung zumindest die Kommunikationsnetzadresse und die Gerätebeschreibung des zweiten Kommunikationsgeräts. Die Kommunikationsnetzadresse des ersten Kommunikationsgeräts in der zumindest einen adressbasierten Nachrichtenfilterregel wird bei Empfang der Änderungsmeldung durch die Kommunikationsnetzadresse des zweiten Kommunikationsgeräts ersetzt. Damit können Nachrichtenfilterregeln schnell und sicher an sich dynamisch ändernde oder dezentral vergebene Kommunikationsnetzadressen angepasst werden. Zudem können grundsätzlich auch bestehende Firewalls weiterhin verwendet werden. Zu ergänzen sind lediglich Funktionalitäten der Adressverwaltungseinheit und der Konvertereinheit.

Ein industrielles Kommunikationsnetz dient in einem industriellen Automatisierungssystem üblicherweise dazu, eine Vielzahl von industriellen Automatisierungsgeräten miteinander zu vernetzen, die im Rahmen einer Fertigungs- oder Prozessautomatisierung zur Steuerung oder Regelung von Anlagen, Maschinen bzw. Geräten vorgesehen sind. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet. Damit ergeben sich auch entsprechende Anforderungen an eine effiziente Anwendung und Aktualisierung von Nachrichtenfilterregeln in Netzzugangskontrolleinheiten, wie Firewalls.

Entsprechend einer bevorzugten Ausgestaltung werden Nachrichtenfilterregeln auf Basis von Gerätebeschreibungen definiert. Dabei werden auf Basis von Gerätebeschreibungen definierte Nachrichtenfilterregeln durch die Konvertereinheit in adressbasierte Nachrichtenfilterregeln umgewandelt und an die Netzzugangskontrolleinheit übermittelt. Vorteilhafterweise wird die Änderungsmeldung über die Registrierung des zweiten Kommunikationsgeräts mit identischer Gerätebeschreibung wie das erste Kommunikationsgerät an die Konvertereinheit übermittelt. Darüber hinaus kann die Konvertereinheit beispielsweise mit einer Speichereinheit für auf Basis von Gerätebeschreibungen definierte Nachrichtenfilterregeln verbunden sein. In diesem Fall greift die Konvertereinheit für eine Aktualisierung adressbasierter Nachrichtenfilterregeln zumindest lesend auf die Speichereinheit zu. Diese ermöglicht eine besonders sichere und effiziente Verwaltung von Nachrichtenfilterregeln. Vorzugsweise bleiben auf Basis von Gerätebeschreibungen definierten Nachrichtenfilterregeln bei einem Geräteaustausch unverändert. Damit können Nachrichtenfilterregeln im Sinn einer robusten Datenstromkontrolle vorab klar festgelegt werden.

Der Austausch des ersten Kommunikationsgeräts durch das zweite Kommunikationsgerät kann auch lediglich logisch erfolgen. Dabei unterscheidet sich das erste Kommunikationsgerät vom zweiten Kommunikationsgerät nur durch seine Kommunikationsnetzadresse. Der Austausch ist in diesem Fall ein Adresswechsel. Damit ist das erfindungsgemäße Verfahren auch bei einem Adresswechsel anwendbar. Darüber hinaus kann entsprechend einer weiteren Ausgestaltung eine Gruppe von ersten Kommunikationsgeräten mit einem ersten Netzadresspräfix und eine Gruppe von zweiten Kommunikationsgeräten mit einem zweiten Netzadresspräfix vorgesehen sein. Die Gruppen der Kommunikationsgeräte unterscheiden sich also nur durch das Netzadresspräfix. In diesem Fall ist der Austausch ein Präfixwechsel für eine Gruppe von Kommunikationsgeräten. Vorzugsweise erfolgt eine Registrierung des Präfixwechsels in der Adressverwaltungseinheit durch ein einziges der Gruppe zugeordnetes Kommunikationsgerät, und zwar gesammelt für sämtliche Kommunikationsgeräte der Gruppe. Ein Szenario für einen Präfixwechsel kann beispielweise eine Subnetzänderung bzw. eine Subnetzadressänderung sein.
Die Adressverwaltungseinheit löscht entsprechend einer vorteilhaften Weiterbildung bei einer festgestellten Übereinstimmung der Gerätebeschreibungen des ersten und des zweiten Kommunikationsgeräts die Registrierung des ersten Kommunikationsgeräts. Dies ermöglicht eine konsistente und redundanzfreie Adressverwaltung. Vorzugsweise legen innerhalb des industriellen Kommunikationsnetzes zumindest das erste und das zweite Kommunikationsgerät selbständig ihre jeweilige Kommunikationsnetzadresse fest. Damit ergibt sich ein zusätzlich reduzierter Adressverwaltungsaufwand. Die Kommunikationsnetzadressen des ersten und des zweiten Kommunikationsgeräts können beispielsweise IPv6-Adressen sein, so dass zur Realisierung der vorliegenden Erfindung auf bewährte und interoperable Konzepte zurückgegriffen werden kann.

Die Adressverwaltungseinheit für ein industrielles Kommunikationsnetz ist zur Durchführung eines vorangehend beschriebenen Verfahrens ausgestaltet und eingerichtet. Insbesondere ist die Adressverwaltungseinheit für eine Registrierung von Kommunikationsgeräten mit einer jeweiligen Kommunikationsnetzadresse und Gerätebeschreibung bei einer Inbetriebnahme des jeweiligen Kommunikationsgeräts ausgestaltet und eingerichtet. Dabei umfasst die Gerätebeschreibung zumindest eine Funktions- bzw. Topologieangabe. Außerdem ist die Adressverwaltungseinheit für eine Überprüfung ausgestaltet und eingerichtet, ob ein registriertes zweites Kommunikationsgerät eine identische Gerätebeschreibung wie ein früher registriertes erstes Kommunikationsgerät aufweist. Darüber hinaus ist die Adressverwaltungseinheit für eine Übermittlung einer Änderungsmeldung an eine Netzzugangskontrolleinheit oder an eine Konvertereinheit bei einem positiven Überprüfungsergebnis ausgestaltet und eingerichtet. Die Änderungsmeldung umfasst dabei zumindest die Kommunikationsnetzadresse und die Gerätebeschreibung des zweiten Kommunikationsgeräts. Insgesamt ermöglicht die Adressverwaltungseinheit eine einfache Integration eines vorangehend beschriebenen Verfahrens in ein bestehendes industrielles Kommunikationsnetz.
Die erfindungsgemäße Konvertereinheit für Nachrichtenfilterregeln einer Netzzugangskontrolleinheit innerhalb eines industriellen Kommunikationsnetzes ist zur Durchführung eines vorangehend beschriebenen Verfahrens ausgestaltet und eingerichtet. Insbesondere ist die erfindungsgemäße Konvertereinheit dafür ausgestaltet und eingerichtet, bei Empfang einer Änderungsmeldung von einer Adressverwaltungseinheit eine Kommunikationsnetzadresse eines ausgetauschten ersten Kommunikationsgeräts in zumindest einer adressbasierten Nachrichtenfilterregel durch eine Kommunikationsnetzadresse eines austauschenden zweiten Kommunikationsgeräts mit identischer Gerätebeschreibung zu ersetzen. Dabei umfasst die Gerätebeschreibung zumindest eine Funktions- bzw. Topologieangabe, während die Änderungsmeldung zumindest die Kommunikationsnetzadresse und die Gerätebeschreibung des zweiten Kommunikationsgeräts umfasst. Vorteilhafterweise ermöglicht die erfindungsgemäße Konvertereinheit eine Verwendung bestehender Firewalls mit adressbasierten Filterregeln.

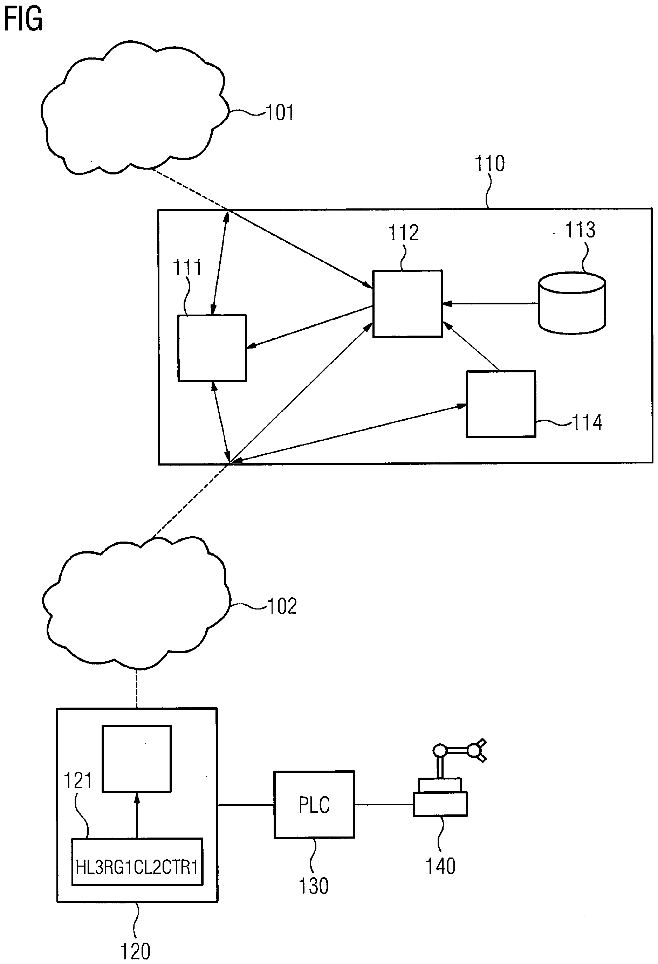

Die vorliegende Erfindung wird nachfolgend an einem Ausführungsbeispiel anhand der Zeichnung näher erläutert. Es zeigt die
- Figur: ein industrielles Kommunikationsnetz mit einer Firewall, einer Adressverwaltungseinheit und einer Filterregel-Konvertereinheit.

Das in der Figur dargestellte industrielle Kommunikationsnetz umfasst ein erstes ungesichertes Teilnetz 101, ein mit diesem verbundenes Firewall-System 110, ein über ein zweites gesichertes Teilnetz 102 mit dem Firewall-System 110 verbundenes Kommunikationsgerät 120 und eine mit dem Kommunikationsgerät 120 verbundene speicherprogrammierbare Steuerungseinheit 130 für eine Maschine oder einen Roboter 140.

Dem Kommunikationsgerät 120 ist zumindest eine adressbasierte Nachrichtenfilterregel zugeordnet, die durch eine Netzzugangskontroll- bzw. Paketfiltereinheit 111 des Firewall-Systems 110 angewendet wird. Bei einer Inbetriebnahme wird das Kommunikationsgerät 120 mit seiner Kommunikationsnetzadresse und einem technologischen Namen bzw. einer Gerätebeschreibung 121 in einer Adressverwaltungseinheit 114 des Firewall-Systems registriert. Die Gerätebeschreibung 121 umfasst dabei zumindest eine Funktions- bzw. Topologieangabe. Das Kommunikationsgerät 120 legt seine Kommunikationsnetzadresse selbständig fest. Im vorliegenden Ausführungsbeispiel ist die Kommunikationsnetzadresse des Kommunikationsgeräts 120 eine IPv6-Adresse.

Nachrichtenfilterregeln werden zunächst auf Basis von Gerätebeschreibungen symbolisch definiert und dementsprechend in einer Regel-Datenbank 113 des Firewall-Systems 110 gespeichert. Auf diese Regel-Datenbank 113 greift eine Konvertereinheit 112 des Firewall-Systems 110 zu, die symbolisch definierte Nachrichtenfilterregeln in adressbasierte Nachrichtenfilterregeln umwandelt und in umgewandelter Form an die Paketfiltereinheit 111 bereitstellt.

Bei einem Austausch des Kommunikationsgeräts 120 durch ein Ersatz-Kommunikationsgerät erfolgt eine Registrierung des Ersatz-Kommunikationsgeräts in der Adressverwaltungseinheit 114. Dabei werden insbesondere Kommunikationsnetzadresse und Gerätebeschreibung des Ersatz-Kommunikationsgeräts erfasst. Auch das Ersatz-Kommunikationsgerät legt seine IPv6-Kommunikationsnetzadresse selbständig fest. Die Adressverwaltungseinheit 114 überprüft bei der Registrierung des Ersatz-Kommunikationsgeräts, ob zuvor bereits ein Kommunikationsgerät mit identischer Gerätebeschreibung registriert worden ist. Im Fall eines positiven Überprüfungsergebnisses übermittelt die Adressverwaltungseinheit 114 eine Änderungsmeldung an die Konvertereinheit 112 über die Registrierung des Ersatz-Kommunikationsgeräts mit identischer Gerätebeschreibung wie das ersetzte Kommunikationsgerät 120. Die Änderungsmeldung umfasst zumindest die Kommunikationsnetzadresse und die Gerätebeschreibung des Ersatz-Kommunikationsgeräts. Bei einer festgestellten Übereinstimmung der Gerätebeschreibungen des ersetzten Kommunikationsgeräts 120 und des Ersatz-Kommunikationsgeräts löscht die Adressverwaltungseinheit 114 im vorliegenden Ausführungsbeispiel die Registrierung des ersetzten Kommunikationsgeräts 120.

Als Reaktion auf die Änderungsmeldung tauscht die Konvertereinheit 112 die Kommunikationsnetzadresse des ersetzten Kommunikationsgeräts 120 in adressbasierten Nachrichtenfilterregeln durch die Kommunikationsnetzadresse des Ersatz-Kommunikationsgeräts aus. Für eine Aktualisierung adressbasierter Nachrichtenfilterregeln ruft die Konvertereinheit 112 aus der mit ihr verbundenen Regel-Datenbank 113 für das ersetzte Kommunikationsgerät 120 symbolisch definierte Nachrichtenfilterregeln ab und wandelt diese anschließend unter Verwendung der Kommunikationsnetzadresse des Ersatz-Kommunikationsgeräts in adressbasierte Nachrichtenfilterregeln für die Paketfiltereinheit 111 um. Bei einem reinen Geräteaustausch bleiben die auf Basis von Gerätebeschreibungen symbolisch definierten Nachrichtenfilterregeln grundsätzlich unverändert.

Die Adressverwaltungseinheit 114 ist insgesamt für eine Registrierung von Kommunikationsgeräten mit einer jeweiligen Kommunikationsnetzadresse und Gerätebeschreibung bei einer Inbetriebnahme des jeweiligen Kommunikationsgeräts vorgesehen. Hierzu ist die Adressverwaltungseinheit 114 für eine Überprüfung ausgestaltet und eingerichtet, ob ein neu registriertes Kommunikationsgerät eine identische Gerätebeschreibung wie ein früher registriertes Kommunikationsgerät aufweist. Darüber hinaus ist die Adressverwaltungseinheit 114 dafür konfiguriert, bei einem positiven Überprüfungsergebnis einer Änderungsmeldung an die Konvertereinheit 112 zu übermitteln. Die Konvertereinheit 112 ist dementsprechend dafür konfiguriert, bei Empfang einer Änderungsmeldung die Kommunikationsnetzadresse des ersetzten Kommunikationsgeräts in adressbasierten Nachrichtenfilterregeln durch die Kommunikationsnetzadresse des Ersatz-Kommunikationsgeräts zu ersetzen. Sowohl die Adressverwaltungseinheit 114 als auch die Konvertereinheit 112 können als programmierbare rechnerbasierte Einheiten bzw. Anwendungsinstanzen realisiert werden.

Wie durch einen Pfeil vom ersten Teilnetz 101 in Richtung des Firewall-Systems 110 angedeutet, kann vorangehend beschriebenes Verfahren auch auf eine Gruppe von ersten Kommunikationsgeräten und eine Gruppe von zweiten Kommunikationsgeräten angewendet werden, die sich nur durch ein Netzadresspräfix voneinander unterscheiden. Zuvor beschriebener Austausch entspricht in diesem Fall einem Präfixwechsel für eine Gruppe von Kommunikationsgeräten. Vorteilhafterweise erfolgt eine Sammel-Registrierung des Präfixwechsels in der Adressverwaltungseinheit 114 durch ein einziges der Gruppe zugeordnetes Kommunikationsgerät für sämtliche Kommunikationsgeräte der Gruppe.

## Patentansprüche

1. Verfahren zur Aktualisierung von Nachrichtenfilterregeln einer Netzzugangskontrolleinheit eines industriellen Kommunikationsnetzes, bei dem
- ein erstes Kommunikationsgerät (120), dem zumindest eine adressbasierte Nachrichtenfilterregel zugeordnet ist, mit seiner Kommunikationsnetzadresse und einer Gerätebeschreibung (121) bei einer Inbetriebnahme in einer Adressverwaltungseinheit (114) registriert wird, wobei die Gerätebeschreibung zumindest eine Funktions- und/oder Topologieangabe umfasst,
- bei einem Austausch des ersten Kommunikationsgeräts (120) durch ein zweites Kommunikationsgerät eine Registrierung des zweiten Kommunikationsgeräts in der Adressverwaltungseinheit (114) erfolgt, wobei eine Kommunikationsnetzadresse und eine Gerätebeschreibung des zweiten Kommunikationsgeräts erfasst werden,
- die Adressverwaltungseinheit (114) bei der Registrierung des zweiten Kommunikationsgeräts überprüft, ob bereits ein Kommunikationsgerät mit identischer Gerätebeschreibung registriert ist,
- die Adressverwaltungseinheit (114) bei einem positiven Überprüfungsergebnis eine Änderungsmeldung über die Registrierung des zweiten Kommunikationsgeräts mit identischer Gerätebeschreibung (121) wie das erste Kommunikationsgerät (120) an die Netzzugangskontrolleinheit (111) oder an eine Konvertereinheit (112) übermittelt, wobei die Änderungsmeldung zumindest die Kommunikationsnetzadresse und die Gerätebeschreibung des zweiten Kommunikationsgeräts umfasst,
**dadurch gekennzeichnet, dass**
- die Kommunikationsnetzadresse des ersten Kommunikationsgeräts (120) in der zumindest einen adressbasierten Nachrichtenfilterregel bei Empfang der Änderungsmeldung durch die Kommunikationsnetzadresse des zweiten Kommunikationsgeräts ersetzt wird,
- durch die Netzzugangskontrolleinheit (111) adressbasierte Nachrichtenfilterregeln angewendet werden,
- Nachrichtenfilterregeln auf Basis von Gerätebeschreibungen (121) definiert werden,
- auf Basis von Gerätebeschreibungen (121) definierte Nachrichtenfilterregeln durch die Konvertereinheit (112) in adressbasierte Nachrichtenfilterregeln umgewandelt und an die Netzzugangskontrolleinheit (111) übermittelt werden.

2. Verfahren nach Anspruch 1,
bei dem die Änderungsmeldung über die Registrierung des zweiten Kommunikationsgeräts mit identischer Gerätebeschreibung wie das erste Kommunikationsgerät an die Konvertereinheit übermittelt wird.

3. Verfahren nach einem der Ansprüche 1 oder 2,
bei dem die Konvertereinheit mit einer Speichereinheit für auf Basis von Gerätebeschreibungen definierte Nachrichtenfilterregeln verbunden ist, und bei dem die Konvertereinheit für eine Aktualisierung adressbasierter Nachrichtenfilterregeln zumindest lesend auf die Speichereinheit zugreift.

4. Verfahren nach einem der Ansprüche 1 bis 3,
bei dem die auf Basis von Gerätebeschreibungen definierten Nachrichtenfilterregeln bei einem Geräteaustausch unverändert bleiben.

5. Verfahren nach einem der Ansprüche 1 bis 4,
bei dem die Adressverwaltungseinheit bei einer festgestellten Übereinstimmung der Gerätebeschreibungen des ersten und des zweiten Kommunikationsgeräts die Registrierung des ersten Kommunikationsgeräts löscht.

6. Verfahren nach einem der Ansprüche 1 bis 5,
bei dem innerhalb des industriellen Kommunikationsnetzes zumindest das erste und das zweite Kommunikationsgerät selbständig ihre jeweilige Kommunikationsnetzadresse festlegen.

7. Verfahren nach einem der Ansprüche 1 bis 6,
bei dem die Kommunikationsnetzadressen des ersten und des zweiten Kommunikationsgeräts IPv6-Adressen sind.

8. Verfahren nach einem der Ansprüche 1 bis 7,
bei dem die Netzzugangskontrolleinheit eine Firewall für Datenrahmen und/oder Datenpakete ist.

9. Verfahren nach einem der Ansprüche 1 bis 8,
bei dem der Austausch des ersten Kommunikationsgeräts durch das zweite Kommunikationsgerät lediglich logisch erfolgt, wobei sich das erste Kommunikationsgerät vom zweiten Kommunikationsgerät nur durch seine Kommunikationsnetzadresse unterscheidet, und bei dem der Austausch ein Adresswechsel ist.

10. Verfahren nach einem der Ansprüche 1 bis 9,
bei dem eine Gruppe von ersten Kommunikationsgeräten und eine Gruppe von zweiten Kommunikationsgeräten vorgesehen sind, wobei sich die Gruppen der Kommunikationsgeräte nur durch ein Netzadresspräfix unterscheiden, und bei dem der Austausch ein Präfixwechsel für eine Gruppe von Kommunikationsgeräten ist, und bei dem eine Registrierung des Präfixwechsels in der Adressverwaltungseinheit durch ein der Gruppe zugeordnetes Kommunikationsgerät erfolgt.

11. Konvertereinheit für Nachrichtenfilterregeln einer Netzzugangskontrolleinheit innerhalb eines industriellen Kommunikationsnetzes zur Durchführung eines Verfahrens nach einem der Ansprüche 1 bis 10,
bei dem die Konvertereinheit dafür ausgestaltet und eingerichtet ist, bei Empfang einer Änderungsmeldung von einer Adressverwaltungseinheit eine Kommunikationsnetzadresse eines ausgetauschten ersten Kommunikationsgeräts in zumindest einer adressbasierten Nachrichtenfilterregel durch eine Kommunikationsnetzadresse eines austauschenden zweiten Kommunikationsgeräts mit identischer Gerätebeschreibung zu ersetzen, wobei die Gerätebeschreibung zumindest eine Funktions- und/oder Topologieangabe umfasst, und wobei die Änderungsmeldung zumindest die Kommunikationsnetzadresse und die Gerätebeschreibung des zweiten Kommunikationsgeräts umfasst, und bei dem die Konvertereinheit dafür ausgestaltet und eingerichtet ist, dass auf Basis von Gerätebeschreibungen definierte Nachrichtenfilterregeln durch die Konvertereinheit in adressbasierte Nachrichtenfilterregeln umgewandelt und an die Netzzugangskontrolleinheit übermittelt werden.

## Claims

1. Method for updating message filter rules of a network access control unit of an industrial communication network, in which
- a first communication device (120), to which at least one address-based message filter rule is assigned, is registered with its communication network address and a device description (121) in an address management unit (114) when activation occurs, wherein the device description comprises at least one function indication and/or topology indication,
- when the first communication device (120) is replaced by a second communication device, the second communication device is registered in the address management unit (114), wherein a communication network address and a device description of the second communication device are acquired,
- the address management unit (114) checks, during the registration of the second communication device, whether a communication device with an identical device description is already registered,
- when there is a positive check result, the address management unit (114) transmits a change message relating to the registration of the second communication device with an identical device description (121) to that of the first communication device (120) to the network access control unit (111) or to a converter unit (112), wherein the change message comprises at least the communication network address and the device description of the second communication device,
**characterized in that**
- when the change message is received, the communication network address of the first communication device (120) is replaced by the communication network address of the second communication device in the at least one address-based message filter rule,
- address-based message filter rules are applied by the network access control unit (111),
- message filter rules are defined on the basis of device descriptions (121),
- message filter rules which are defined on the basis of device descriptions (121) are converted into address-based message filter rules by the converter unit (112) and transmitted to the network access control unit (111).

2. Method according to Claim 1,
in which the change message relating to the registration of the second communication device with an identical device description to that of the first communication device is transmitted to the converter unit.

3. Method according to one of Claims 1 or 2,
in which the converter unit is connected to a memory unit for message filter rules which are defined on the basis of device descriptions, and in which the converter unit accesses the memory unit, at least to perform reading, in order to update address-based message filter rules.

4. Method according to one of Claims 1 to 3,
in which the message filter rules which are defined on the basis of device descriptions remain unchanged when a device is replaced.

5. Method according to one of Claims 1 to 4,
in which, when correspondence is detected between the device descriptions of the first and second communication devices, the address management unit deletes the registration of the first communication device.

6. Method according to one of Claims 1 to 5,
in which within the industrial communication network at least the first and second communication devices automatically define their respective communication network address.

7. Method according to one of Claims 1 to 6,
in which the communication network addresses of the first and second communication devices are IPv6 addresses.

8. Method according to one of Claims 1 to 7,
in which the network access control unit is a firewall for data frames and/or data packets.

9. Method according to one of Claims 1 to 8,
in which the replacement of the first communication device by the second communication device takes place only logically, wherein the first communication device differs from the second communication device only in its communication network address, and in which the replacement is a change of address.

10. Method according to one of Claims 1 to 9,
in which a group of first communication devices and a group of second communication devices are provided, wherein the groups of the communication devices differ only in a network address prefix, and in which the replacement is a change of prefix for a group of communication devices, and in which the change of prefix is registered in the address management unit by a communication device which is assigned to the group.

11. Converter unit for message filter rules of a network access control unit within an industrial communication network for carrying out a method according to one of Claims 1 to 10, in which the converter unit is designed and configured to replace a communication network address of an exchanged first communication device in at least one address-based message filter rule by a communication network address of an exchanging second communication device with an identical device description when a change message is received from an address management unit, wherein the device description comprises at least one function indication and/or topology indication, and wherein the change message comprises at least the communication network address and the device description of the second communication device, and in which the converter unit is designed and configured such that message filter rules which are defined on the basis of device descriptions are converted into address-based message filter rules by the converter unit and transmitted to the network access control unit.

## Revendications

1. Procédé d'actualisation de règles de filtrage de messages d'une unité de commande d'accès à un réseau de communication industriel, dans lequel
- on enregistre un premier appareil (120) de communication, auquel est affectée au moins une règle de filtrage de messages reposant sur une adresse avec son adresse du réseau de communication et une description (121) d'appareil lors d'une mise en service dans une unité (114) de gestion d'adresses, la description d'appareil comprenant au moins une indication de fonction et/ou une indication de topologie,
- lors d'un remplacement du premier appareil (120) de communication par un deuxième appareil de communication, un enregistrement du deuxième appareil de communication est effectué dans l'unité (114) de gestion d'adresses, une adresse de réseau de communication et une description de l'appareil du deuxième appareil de communication étant saisies,
- l'unité (114) de gestion d'adresses contrôle, lors de l'enregistrement du deuxième appareil de communication, si un appareil de communication ayant une description d'appareil identique est déjà enregistré,
- l'unité (114) de gestion d'adresses transmet, si le résultat du contrôle est positif, un message de modification de l'enregistrement du deuxième appareil de communication, ayant une description (121) d'appareil identique au premier appareil (120) de communication, à l'unité (120) de commande d'accès au réseau ou à l'unité (112) de convertisseur, le message de modification comprenant au moins l'adresse dans le réseau de communication et la description d'appareil du deuxième appareil de communication,
**caractérisé en ce que**
- on remplace, à la réception du message de modification, l'adresse dans le réseau de communication du premier appareil (120) de communication dans la au moins une règle de filtrage de messages reposant sur une adresse par l'adresse dans le réseau de communication du deuxième appareil de communication,
- on applique, par l'unité (111) de commande d'accès au réseau, des règles de filtrage de messages reposant sur une adresse,
- on définit des règles de filtrage de messages sur la base de descriptions d'appareil,
- on transforme, par l'unité (112) de convertisseur, des règles de filtrage de messages définies sur la base de descriptions (121) d'appareil en des règles de filtrage de messages reposant sur une adresse et on les transmet à l'unité (111) de commande d'accès au réseau.

2. Procédé suivant la revendication 1,
dans lequel on transmet, à l'unité de convertisseur, le message de modification de l'enregistrement du deuxième appareil de communication ayant une description d'appareil identique à celle du premier appareil de communication.

3. Procédé suivant l'une des revendications 1 ou 2,
dans lequel l'unité de convertisseur est reliée à une unité de mémoire de règles de filtrage de messages définies sur la base de descriptions d'appareil et dans lequel l'unité de convertisseur accède, pour une actualisation de règles de filtrage de messages reposant sur une adresse, au moins en lecture, à l'unité de mémoire.

4. Procédé suivant l'une des revendications 1 à 3,
dans lequel les règles de filtrage de messages définies sur la base de descriptions de l'appareil restent inchangées lors d'un remplacement d'appareil.

5. Procédé suivant l'une des revendications 1 à 4,
dans lequel l'unité de gestion d'adresses efface l'enregistrement du premier appareil de communication, s'il est constaté une coïncidence des descriptions de l'appareil du premier et du deuxième appareils de communication.

6. Procédé suivant l'une des revendications 1 à 5,
dans lequel, au sein du réseau de communication industriel, au moins le premier et le deuxième appareils de communication fixent, de manière indépendante, leur adresse respective dans le réseau de communication.

7. Procédé suivant l'une des revendications 1 à 6,
dans lequel les adresses, dans le réseau de communication du premier et du deuxième appareils de communication sont des adresses IPv6.

8. Procédé suivant l'une des revendications 1 à 7,
dans lequel l'unité de commande d'accès au réseau est un firewall pour des trames de données et/ou des paquets de données.

9. Procédé suivant l'une des revendications 1 à 8,
dans lequel le remplacement du premier appareil de communication par le deuxième appareil de communication s'effectue seulement en logique, le premier appareil de communication se distinguant du deuxième appareil de communication seulement par son adresse dans le réseau de communication et dans lequel le remplacement est un changement d'adresse.

10. Procédé suivant l'une des revendications 1 à 9,
dans lequel il est prévu un groupe de premiers appareils de communication et un groupe de deuxièmes appareils de communication, les groupes des appareils de communication ne se distinguant que par un préfixe d'adresses dans le réseau, et dans lequel le remplacement est un changement de préfixe pour un groupe d'appareils de communication et dans lequel un enregistrement du changement de préfixe s'effectue dans l'unité de gestion d'adresses par un appareil de communication affecté au groupe.

11. Unité de convertisseur pour des règles de filtrage de messages d'unités de commande d'accès à un réseau au sein d'un réseau de communication industriel pour effectuer un procédé suivant l'une des revendications 1 à 10,
dans lequel l'unité de convertisseur est conformée et conçue pour, à la réception d'un message de modification d'une unité de gestion d'adresses, remplacer une adresse dans le réseau de communication d'un premier appareil de communication remplacé dans au moins une règle de filtrage de messages reposant sur une adresse par une adresse dans le réseau de communication d'un deuxième appareil de communication de remplacement ayant une description de l'appareil identique, la description de l'appareil comprenant au moins une indication de fonction et/ou de topologie et le message de modification comprenant au moins l'adresse dans le réseau de communication et la description de l'appareil du deuxième appareil de communication et dans lequel l'unité de convertisseur est constitué et conçu pour transformer des règles de filtrage de messages définies sur la base de descriptions d'appareil par l'unité de convertisseur en des règles de filtrage de messages reposant sur une adresse et les transmettre à l'unité de commande d'accès au réseau.
